# NEUE EUROPÄISCHE PATENTSCHRIFT

(11) **EP 3 822 524 B2**
(45) Veröffentlichungstag und Bekanntmachung des Hinweises auf die Entscheidung über den Einspruch: **02.07.2025**
(45) Hinweis auf die Patenterteilung: 18.05.2022
(21) Anmeldenummer: 19209432.4
(22) Anmeldetag: 15.11.2019
(51) Int. Cl.: F16K 17/04, F16K 17/36

(54) **CRASH-SENSOR MIT PENDEL**
CRASH SENSOR WITH PENDULUM
CAPTEUR D'IMPACT POURVU DE PENDULE

(43) Veröffentlichungstag der Anmeldung: 19.05.2021
(73) Patentinhaber: GOK Regler- und Armaturen-Gesellschaft mbH & Co.KG, 97340 Marktbreit (DE)
(72) Erfinder: SMEENK, Alfons, 97297 Waldbüttelbrunn (DE); LUTZ, Karl Heinz, 97318 Kitzingen (DE)
(74) Vertreter: Vossius & Partner Patentanwälte Rechtsanwälte mbB

(56) Entgegenhaltungen:
- WO-A2-03/095965
- DE-B- 1 030 261
- FR-A- 1 187 122
- JP-A- S60 208 675
- US-A- 2 255 965
- US-A- 2 853 089
- US-A- 3 109 441
- US-A- 3 995 710
- US-A- 4 191 868
- US-A- 4 314 120
- US-A- 4 593 711
- US-A1- 2014 216 569

## Beschreibung

Die Erfindung betrifft ein Abschaltventil, ein Gasleitungssystem und ein Fahrzeug.

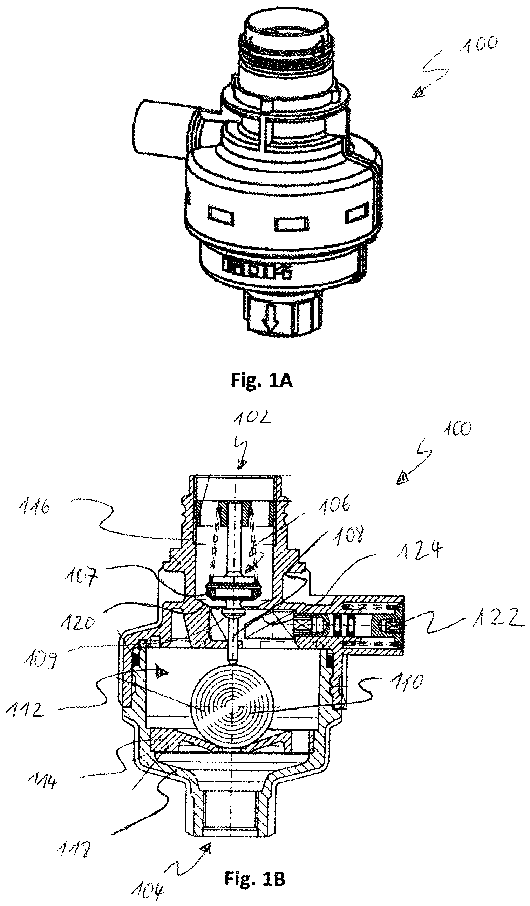

In den Figuren 1A und 1B ist ein bekanntes Abschaltventil gezeigt, welches üblicherweise in Wohnwägen und Reisemobilen installiert wird. Dieses Abschaltventil ist eingerichtet, dass es bei Überschreiten einer bestimmten Beschleunigung geschlossen wird und so einen weiteren Gasdurchfluss verhindert. Auf diese Weise kann verhindert werden, dass beispielsweise bei einem Unfall Gas in das dem Abschaltventil nachgelagerte Gasleitungssystem gelangt. So kann die Gefahr von Gasleckagen, beispielsweise bei Unfällen, verringert werden.

Das bekannte Abschaltventil 100 hat einen Ventilkörper, der aus einem oberen Element 116 und einem unteren Element 118 aufgebaut ist. Das obere Element 116 hat einen Gaseinlass 102 und das untere Element 118 einen Gasauslass 104. Zwischen dem Gaseinlass 102 und dem Gaseinlass 104 ist eine Verschlusseinrichtung 106 angeordnet, die einen Ventilteller mit einem sich axial davon erstreckenden Ventilstift 108 aufweist. Die Verschlusseinrichtung 106 ist derart vorgespannt, dass ein Dichtungsabschnitt 107 der Verschlusseinrichtung 106 gegen einen entsprechenden Ventilsitz 120 des oberen Elements 116 gedrückt wird. Weiterhin weist das Abschaltventil einen Schaltraum 112 auf, innerhalb dessen ein als Kugel 110 ausgebildeter Trägheitskörper frei bewegbar ist. Innerhalb des Abschaltventils befindet sich eine zusätzliche konische Fläche 114, die den Boden des Schaltraums bildet und die bei korrekter Ausrichtung des Abschaltventils nach unten konisch zuläuft. Eine Kante dieser konischen Fläche 114 bildet eine Ruheposition für die Kugel 110. Wenn sich die Kugel 110 in der Ruheposition befindet, drückt die Kugel den Ventilstift 108 nach oben, sodass die Dichtung 107 von dem Ventilsitz 120 beabstandet ist, sodass sich die Verschlusseinrichtung 106 in der offenen Position befindet. Auf diese Weise kann Gas vom Gaseinlass 102 zum Gasauslass 104 fließen. Bei Auftreten einer Beschleunigung, die die vorbestimmte Beschleunigung überschreitet, wird die Kugel 110 von ihrer Ruheposition wegbewegt, sodass der Ventilstift 108 aufgrund der Vorspannung der Verschlusseinrichtung 106 nach unten bewegt wird und die Dichtung 107 gegen den Ventilsitz 120 gepresst wird. Die Verschlusseinrichtung 106 befindet sich dann in der geschlossenen Position. Somit wird verhindert, dass Gas vom Gaseinlass 102 zum Gasauslass 104 fließt. Sollte das Abschaltventil fälschlicherweise ausgelöst worden sein, kann der Benutzer auf das Betätigungselement 122 drücken. Dieses Betätigungselement 122 weist eine schiefe Ebene 124 auf, die gegen einen konischen Abschnitt 109 der Verschlusseinrichtung 106 drückt und so die Verschlusseinrichtung 106 nach oben zwingt. Aufgrund der konischen Fläche 114 rollt die Kugel in ihre Ruheposition zurück und verhindert wieder ein Verschließen der Verschlusseinrichtung 106.

Die US 4,314,120 betrifft eine auf einen Schock ansprechende Vorrichtung.

Die US 4,191,868 betrifft eine seismische Abschaltvorrichtung.

Die US 3,109,441 betrifft ein auf Vibrationen ansprechendes Schnellschlussventil.

Die US 2,853,089 betrifft eine Befestigung für ein Sicherheitsventil.

Die US, 3,995,710 betrifft ein Abschaltventil.

Aufgabe der Erfindung ist es, ein verbessertes Abschaltventil bereitzustellen. Insbesondere ist es wünschenswert, das Ansprechverhalten des Abschaltventils auf Beschleunigungen zu verbessern, ein schnelleres Zurückkehren des Trägheitskörpers in den Ruhezustand sicherzustellen und/oder den Strömungswiderstand des Abschaltventils zu verringern.

Diese Aufgaben werden zumindest teilweise durch die Gegenstände der unabhängigen Ansprüche 1, 2 und 3 gelöst. Weitere Ausführungsformen der Erfindung sind in den abhängigen Ansprüchen, der Beschreibung und den Figuren offenbart.

Im Rahmen der Erfindung bezeichnet der Begriff "oben" eine bezüglich des Abschaltventils definierte Richtung und/oder Position, die bei einer ordnungsgemäß montierten Abschalteinrichtung nach oben zeigt. Entsprechend bezeichnet der Begriff "unten" eine bezüglich des Abschaltventils definierte Richtung und/oder Position, die bei einer ordnungsgemäß montierten Abschalteinrichtung nach unten zeigt.

Die Erfindung betrifft ein Abschaltventil, vorzugsweise Crash-Ventil, zum Unterbrechen eines Gasdurchflusses. Das Abschaltventil umfasst einen Gaseinlass, einen Gasauslass, eine in Strömungsrichtung zwischen Gaseinlass und Gasauslass angeordnete Verschlusseinrichtung sowie einen pendelnd gelagerten Trägheitskörper. Die Verschlusseinrichtung ist entlang einer Bewegungsrichtung von einer offenen Position in eine geschlossene Position bewegbar. Ferner ist die Verschlusseinrichtung in den geschlossenen Zustand vorgespannt. Die Verschlusseinrichtung umfasst außerdem ein Abstützelement, vorzugsweise eine in der Bewegungsrichtung vorstehende Struktur, das zusammen mit der Verschlusseinrichtung bewegt wird, sodass das Abstützelement im offenen Zustand eine erste Position und im geschlossenen Zustand eine zweite Position einnimmt. Der Trägheitskörper ist eingerichtet, eine Ruheposition, in der der Trägheitskörper parallel zu einer durch die Bewegungsrichtung der Verschlusseinrichtung definierten ersten Achse ausgerichtet ist, und eine ausgelenkte Position, in der der Trägheitskörper bezüglich der ersten Achse geneigt ist, einzunehmen. Der Trägheitskörper ist eingerichtet, selbstständig von der ausgelenkten Position in die Ruheposition zurückzukehren. In der Ruheposition hält der Trägheitskörper das Abstützelement in der ersten Position, sodass die Verschlusseinrichtung daran gehindert wird, in die geschlossene Position zurückzukehren. Der Trägheitskörper ist ferner eingerichtet, dass er bei Überschreiten einer vorbestimmten Beschleunigung durch eine auftretende Beschleunigungskraft von der Ruheposition in die ausgelenkte Position bewegt wird, sodass das Abstützelement die zweite Position und die Verschlusseinrichtung den geschlossenen Zustand einnehmen. Der Trägheitskörper ist zwischen Gaseinlass und Gasauslass im Strömungspfad angeordnet. Zudem hindert das Abstützelement den Trägheitskörper daran, in die Ruheposition zurückzukehren, wenn sich der Trägheitskörper in der ausgelenkten und das Abstützelement in der zweiten Position befinden.

Das Abschaltventil ist somit derart ausgestaltet, dass es bei Überschreiten einer vorbestimmten Beschleunigung geschlossen wird, sodass Gas daran gehindert wird, vom Gaseinlass zum Gasauslass zu fließen. Auf diese Weise können insbesondere bei Verkehrsunfällen stromabwärts des Abschaltventils Leckagen verhindert werden.

Das erfindungsgemäße Abschaltventil ist besonders geeignet, um in Wohnwägen, Reisemobile oder dergleichen installiert zu werden, um das Auftreten von Gasleckagen nach Verkehrsunfällen zu verhindern.

Unter der Verschlusseinrichtung kann dabei ein Element verstanden werden, welches von der offenen Position in die geschlossene Position und umgekehrt bewegbar ist und dabei das Abschaltventil schließt bzw. öffnet. Die Verschlusseinrichtung kann auch als Schließelement bezeichnet werden. Unter dem Merkmal, dass die Verschlusseinrichtung in den geschlossenen Zustand vorgespannt ist, ist zu verstehen, dass die Verschlusseinrichtung beispielsweise mittels eines Federelements vorgespannt ist und diese Vorspannung in Richtung des geschlossenen Zustands wirkt. Das bedeutet, dass die Verschlusseinrichtung in den geschlossenen Zustand gezwungen bzw. gedrückt wird, z.B. durch das Federelement. Das Federelement kann insbesondere eine Spiralfeder sein.

Unter dem Merkmal dass der Trägheitskörper pendelnd gelagert ist, kann verstanden werden, dass der Trägheitskörper nicht frei im Schaltraum bewegbar ist. Stattdessen ist der Trägheitskörper pendelnd und/oder schwenkbar auf einer im Schaltraum ausgebildeten Lagerung gelagert. Das heißt, dass an dem Punkt, wo der Trägheitskörper auf der Lagerung gelagert ist, ein Drehpunkt definiert wird, an dem der Trägheitskörper im Wesentlichen schwenkbar gelagert ist. Der Trägheitskörper kann insbesondere um eine Schwenkachse geschwenkt werden, die sich senkrecht zur Verschlussrichtung und/oder horizontal erstreckt, vorzugsweise um mehrere Achsen. Unter der Angabe "im Wesentlichen" ist zu verstehen, dass der Trägheitskörper auch kleine translatorische Bewegungen durchführen kann, die jedoch im Vergleich zur Schwenkbewegung des Trägheitskörpers vernachlässigbar sind und die Funktion des pendelnd gelagerten Trägheitskörpers nicht beeinträchtigen.

Diese pendelnde Lagerung des Trägheitskörpers bewirkt, dass das Auslöseverhaltens des Trägheitskörpers genauer kontrolliert werden kann. Unter dem Auslösen des Trägheitskörpers ist dabei der Vorgang zu verstehen, bei dem der Trägheitskörper von seiner Ruheposition in die geneigte Position überführt wird.

Außerdem hat ein pendelnd gelagerter Trägheitskörper auch den Vorteil, dass er im Vergleich zu einem frei bewegbaren Körper (z.B. eine Kugel) schneller in seinen Ruhezustand zurückkehrt. Auf diese Weise kann ein zuverlässigeres und schnelleres Zurückschalten des Abschaltventils in den offenen Zustand gewährleistet werden.

Unter der Ruheposition des Trägheitskörpers kann eine im Vergleich zur ausgelenkten Position des Trägheitskörpers günstigere energetische Position verstanden werden. Zum Beispiel kann der Trägheitskörper im Ruhezustand eine geringere potenzielle Energie aufweisen als im geneigten Zustand des Trägheitskörpers. Die potentielle Energie kann beispielsweise die Lageenergie des Trägheitskörpers sein. Die potentielle Energie kann auch eine Spannenergie einer Feder umfassen, mittels welcher der Trägheitskörper pendelnd gelagert ist. Der Ruhezustand kann dabei in der Montageposition des Abschaltventils ein aufrechter Zustand sein, in dem eine Längs- bzw. Rotationsachse des Trägheitskörpers im Wesentlichen im Lot ist. Indem die Ruheposition des Trägheitskörpers energetisch günstiger ist als die ausgelenkte Position des Trägheitskörpers, kehrt der Trägheitskörper selbstständig von der ausgelenkten Position in die Ruheposition zurück.

Bei der vorbestimmten Beschleunigung kann es sich beispielsweise um eine Beschleunigung handeln, die typischerweise bei Auffahrunfällen oder anderen Unfällen auftritt. Vorzugsweise beträgt die vorbestimmte Beschleunigung mindestens 2 g, besonders bevorzugt mindestens 3 g.

Unter der offenen Position des Abschaltventils bzw. der Verschlusseinrichtung kann ein Zustand des Abschaltventils bzw. der Verschlusseinrichtung verstanden werden, bei dem Gas vom Gaseinlass zum Gasauslass fließen bzw. strömen kann. Entsprechend kann unter der geschlossenen Position ein Zustand verstanden werden, bei dem die Verschlusseinrichtung Gas daran hindert, vom Gaseinlass zum Gasauslass zu fließen bzw. zu strömen.

Darunter, dass der Trägheitskörper eingerichtet ist, eine Ruheposition einzunehmen, in der der Trägheitskörper parallel zur ersten Achse ist, kann verstanden werden, dass eine Längs- und/oder Rotationsachse des Trägheitskörpers in der Ruheposition parallel zur ersten Achse ist.

Unter dem Abstützelement der Verschlusseinrichtung kann eine Struktur der Verschlusseinrichtung verstanden werden, mit welcher sich die Verschlusseinrichtung am Trägheitskörper abstützt. Dieses Abstützelement kann vorzugsweise entlang der Bewegungsrichtung der Verschlusseinrichtung hervorstehen, vorzugsweise nach unten.

Vorzugsweise ist der Trägheitskörper in jede Richtung auslenkbar. Das heißt, in der Ruheposition ist der Trägheitskörper eingerichtet, damit eine Längs- und/oder Rotationsachse des Trägheitskörpers parallel zur ersten Achse ist, die durch die Bewegungsrichtung durch die Verschlusseinrichtung definiert ist. Gegenüber dieser Achse kann der Trägheitskörper somit in jede Richtung neigbar sein.

Dadurch kann gewährleistet werden, dass eine Beschleunigung entlang jeder Horizontalrichtung zum Auslösen des Abschaltventils führt. Somit kann die Zuverlässigkeit des Abschaltventils erhöht werden.

Vorzugsweise weist das Abschaltventil einen Ventilkörper auf. Unter dem Ventilkörper kann das Gehäuse des Abschaltventils verstanden werden, welches die Verschlusseinrichtung und/oder den Trägheitskörper beherbergt. Außerdem kann der Ventilkörper den Gaseinlass und/oder den Gasauslass ausbilden. Dieser Ventilkörper kann ein- oder mehrteilig ausgebildet sein. Beispielsweise kann der Ventilkörper ein oberes Teil aufweisen, welches den Gaseinlass ausbildet und die Verschlusseinrichtung umfasst, sowie ein unteres Teil, das den Gasauslass bildet und zusammen mit dem oberen Teil einen Schaltraum für den Trägheitskörper bildet. Der Trägheitskörper kann jedoch auch außerhalb des Ventilkörpers angeordnet sein. In diesem Fall kann das Abstützelement z.B. über einen Hebelmechanismus mit dem Verschlusselement verbunden sein.

Vorzugsweise weist die Verschlusseinrichtung einen Ventilteller und einen entsprechenden Ventilsitz am Ventilkörper auf. Dabei kann der Ventilteller ausgebildet sein, in geschlossenem Zustand der Verschlusseinrichtung am Ventilsitz anzuliegen und/oder gegen den Ventilsitz zu drücken. In geöffnetem Zustand der Verschlusseinrichtung kann der Ventilteller vom Ventilsitz beabstandet sein, sodass Gas zwischen dem Ventilteller und dem Ventilsitz hindurchströmen kann. Der Ventilteller kann beispielsweise von einer Dichtung, z. B. einem O-Ring oder einer anderen ringförmigen Dichtung, z. B. einer ringförmigen Dichtlippe, umgeben sein. Der Ventilsitz kann beispielsweise eine konische ringförmige Struktur des Ventilkörpers sein.

Vorzugsweise ist die Verschlusseinrichtung um eine Rotationsachse rotationssymmentrisch. Der Ventilteller liegt in diesem Fall vorzugsweise in einer Ebene, die senkrecht zur Rotationsachse der Verschlusseinrichtung ist.

Vorzugsweise ist das Abstützelement ein Ventilstift oder eine Ventilnadel, der bzw. die in der Bewegungsrichtung der Verschlusseinrichtung hervorsteht.

Im Falle dass die Verschlusseinrichtung um eine Rotationsachse rotationssymmetrisch ist, erstreckt sich der Ventilstift oder die Ventilnadel vorzugsweise entlang der Rotationsachse. Mit anderen Worten erstreckt sich der Ventilstift oder die Ventilnadel vorzugsweise axial von dem Ventilteller weg.

Dadurch, dass es sich beim Abstützelement um einen Ventilstift oder eine Ventilnadel handelt, kann die Abstützfläche auf dem Trägheitskörper relativ gering sein. Dadurch ist es möglich, ein präziseres Auslöseverhalten des Abschaltventils zu gewährleisten.

Vorzugsweise ist der Ventilstift integral am Ventilteller ausgebildet.

Auf diese Weise kann eine technisch zuverlässige, gasdichte und einfache Konstruktion der Verschlusseinrichtung bereitgestellt werden.

Vorzugsweise weist der Ventilkörper einen Schaltraum für den Trägheitskörper auf. Das heißt, der Ventilkörper kann einen Schaltraum für den Trägheitskörper bilden. Unter dem Schaltraum kann ein Volumen oder Innenraum innerhalb des Ventilkörpers verstanden werden, in welchem sich der Trägheitskörper bewegen kann. Das heißt aber nicht, dass der Trägheitskörper sich im Schaltraum frei bewegen können muss.

Vorzugsweise führt der Strömungspfad zwischen Gaseinlass und Gasauslass zumindest teilweise durch den Schaltraum. Weiter bevorzugt ist der Schaltraum stromabwärts der Verschlusseinrichtung und stromaufwärts des Gasauslasses angeordnet. Auf diese Weise muss der Schaltraum nicht vom Gaspfad abgedichtet werden. Dies ermöglicht eine einfachere und zuverlässigere Konstruktion des Abschaltventils.

Erfindungsgemäß hindert das Abstützelement den Trägheitskörper daran, in die Ruheposition zurückzukehren, wenn sich der Trägheitskörper in der ausgelenkten und das Abstützelement in der zweiten Position befinden.

Auf diese Weise kann gewährleistet werden, dass das Abschaltventil nicht selbstständig in den offenen Zustand zurückkehrt, obwohl der Trägheitskörper eingerichtet ist, selbstständig versucht, von der ausgelenkten Position in die Ruheposition zurückzukehren.

Vorzugsweise greift das Abstützelement in den Trägheitskörper ein, um den Trägheitskörper daran zu hindern, in die Ruheposition zurückzukehren, wenn sich der Trägheitskörper in der ausgelenkten Position und sich das Abstützelement in der zweiten Position befinden.

Auf diese Weise wird der Trägheitskörper in einer definierten ausgelenkten Position gehalten, nachdem das Abschaltventil ausgelöst wurde. Dies bewirkt, dass der Trägheitskörper von einer definierten ausgelenkten Position in die Ruheposition zurückkehrt, wenn der Eingriff des Abstützelements im Trägheitskörper beendet wird. Auf diese Weise hat das Abschaltventil ein definiertes Rückkehrverhalten in die offene Position.

Vorzugsweise greift das Abstützelement in eine Nut des Trägheitskörpers ein, um den Trägheitskörper daran zu hindern, in die Ruheposition zurückzukehren, wenn sich der Trägheitskörper in der ausgelenkten Position und das Abstützelement in der zweiten Position befinden.

Vorzugsweise ist der Trägheitskörper auf einer Lagerung pendelnd und/oder schwenkbar gelagert, insbesondere einer Lagerfläche der Lagerung.

Diese Lagerung kann im Schaltraum des Abschaltventils angeordnet sein.

Vorzugsweise weist die Lagerung eine Öffnung auf, durch die ein Abschnitt des Trägheitskörpers hindurch ragt.

Auf diese Weise kann eine pendelnde Lagerung des Trägheitskörpers erreicht werden, die eine einfache und somit robuste und zuverlässige Konstruktion aufweist. Ferner kann die Öffnung in der Lagerung derart dimensioniert sein, dass der Trägheitskörper im Wesentlichen nur eine pendelnde Bewegung durchführen kann und praktisch keine Translation des Trägheitskörpers erfolgt. Beispielsweise ist der Durchmesser der Öffnung hierfür nicht mehr als 33% größer als der Durchmesser des Abschnitts des Trägheitskörpers, der durch die Öffnung hindurch ragt. Beispielsweise betragen der Durchmesser der Öffnung in der Lagerung 4 mm und der Abschnitt des Trägheitskörpers, der in der Öffnung der Lagerung liegt, 3 mm.

Vorzugsweise liegt die Öffnung am Schnittpunkt der Lagerung mit der ersten Achse.

Auf diese Weise kann ein symmetrischer Aufbau des Abschaltventils erreicht werden, der bewirkt, dass das Abschaltventil in jede Richtung das gleiche bzw. ein ähnliches Auslöseverhalten zeigt.

Vorzugsweise weist die Lagerung eine entlang der ersten Achse und zur vorstehenden Struktur hin zulaufende konische Fläche auf.

Mit anderen Worten ist die Lagerung vorzugsweise nach oben konisch ausgebildet. Auf diese Weise kann mehr Bewegungsfreiheit für den pendelnd gelagerten Trägheitskörper ermöglicht werden. Dadurch dass der Trägheitskörper weiter oben pendelnd gelagert ist, wird eine kompaktere Bauweise des Schaltraums und somit des gesamten Abschaltventils ermöglicht. Vorzugsweise ist die Lagerung im Schaltraum des Ventilkörpers ausgebildet. Dabei kann es sich bei der Lagerung um ein zusätzliches Bauteil handeln, welches im Schaltraum eingelegt oder eingepresst ist, alternativ kann die Lagerung auch integral am Teil des Ventilkörpers ausgebildet sein, das den Schaltraum bildet. Vorzugsweise ist der Trägheitskörper bezüglich einer Symmetrieachse im Wesentlichen rotationssymmetrisch. Die Symmetrieachse ist in der Ruheposition des Trägheitskörpers vorzugsweise parallel zur ersten Achse.

Auf diese Weise kann erreicht werden, dass der Trägheitskörper in jede Richtung das gleiche, bzw. ein ähnliches Auslöseverhalten zeigt.

Unter der Angabe "im Wesentlichen" kann in diesem Zusammenhang verstanden werden, dass der Trägheitskörper durchaus Strukturen aufweisen kann, die die oben genannte Symmetrie stören. Diese Strukturen hindern den Trägheitskörper jedoch nicht daran, in jede Richtung ein gleiches Auslöseverhalten zu haben.

Erfindungsgemäß ist der Trägheitskörper zwischen Gaseinlass und Gasauslass im Strömungspfad angeordnet. Auf diese Weise ist es nicht erforderlich, den Trägheitskörper gegenüber dem Strömungspfad abzudichten. Dies ermöglicht eine einfachere und zuverlässigere Konstruktion des Abschaltventils.

Vorzugsweise weist der Trägheitskörper einen zwischen der Lagerung und dem vorstehenden Teil angeordneten Pendelkopf und einen durch die Öffnung der Lagerung hindurchragenden Pendelarm auf. Beispielsweise beträgt der Durchmesser des Pendelarms 3 mm. Vorzugsweise weist der Pendelkopf auf dessen Oberseite einen mittig angeordneten Vorsprung auf und eine oder mehrere darum herum angeordnete Vertiefungen, insbesondere eine Nut auf, sodass das Abstützelement im offenen Zustand des Ventils auf dem Vorsprung des Pendelkopfs abgestützt ist und das Abstützelement im geschlossenen Zustand des Ventils in die Nut des Ventilkopfs eingreift.

Auf diese Weise können klar definierte Strukturen bereitgestellt werden, auf die sich das Abstützelement abstützen bzw. in die das Abstützelement eingreift. Dadurch kann ein präzises Auslöseverhalten des Abschaltventils gewährleistet werden. In dem eine Nut um einen mittig angeordneten Vorsprung bereitgestellt wird, kann weiterhin sichergestellt werden, dass sich der Trägheitskörper in jede Richtung neigen kann, um das Abschaltventil auszulösen, darüber hinaus kann unabhängig von der Richtung, in die der Pendelkopf beim Auslösen geneigt wird, ein Zurückkehren des Trägheitskörpers in den Ruhezustand verhindert werden.

Vorzugsweise weist der Trägheitskörper am Übergang zwischen Pendelkopf und Pendelarm eine Stützfläche auf, die, wenn sich der Trägheitskörper in der Ruheposition befindet, auf der Lagerung gelagert ist bzw. aufliegt. Beispielsweise ist am Übergang zwischen Pendelkopf und Pendelarm eine Stufe ausgebildet, die die Stützfläche des Trägheitskörpers bildet. Dies wird vorzugsweise dadurch erreicht, dass die Lagerung um die Öffnung herum und/oder der Stützfläche des Trägheitskörpers gegenüberliegend eine nach unten abfallende Lagerfläche aufweist. Vorzugsweise weist die Lagerung eine entlang der ersten Achse und zur vorstehenden Struktur hin zulaufende konische Fläche auf.

Wenn sich der Trägheitskörper in der Ruheposition befindet, liegt die Stützfläche des Trägheitskörpers vorzugsweise nur auf einer Kante auf, die durch die in der Lagerung vorgesehene Öffnung gebildet wird.

Vorzugsweise liegt der Schwerpunkt des Trägheitskörpers zwischen der Lagerung und einem oberen Ende des Pendelkopfs. Mit anderen Worten befindet sich der Schwerpunkt zwischen Lagerung und Verschlusseinrichtung. Besonders bevorzugt ist der Trägheitskörper mittels eines Federelements pendelnd gelagert, das die Stützfläche des Trägheitskörpers gegen die Lagerung drückt.

Auf diese Weise kann ein ideales Auslöseverhalten des Trägheitskörpers sichergestellt werden.

Vorzugsweise weist das Abschaltventil ein Federelement auf, das auf der dem Pendelkopf gegenüberliegenden Seite der Lagerung um den Pendelarm herum angeordnet ist. Weiterhin weist der Pendelarm vorzugsweise ein Fixierelement auf, um das Federelement am Pendelarm zu fixieren. Das Federelement spannt den Trägheitskörper gegen die Lagerung. Das heißt, das Federelement zwingt die Stützfläche gegen die Lagerung.

Das Federelement kann eine Spiralfeder sein.

Zum einen kann das Federelement gewährleisten, dass der Trägheitskörper lediglich eine pendelnde Bewegung und praktisch keine translatorische Bewegung durchführen kann. Außerdem gewährleistet das Federelement, dass der Trägheitskörper besonders schnell in den Ruhezustand zurückkehrt. Weiterhin kann durch das Federelement erreicht werden, dass der Schwerpunkt des Trägheitskörpers oberhalb der Lagerung sein kann, sodass der Trägheitskörper und so auch das Abschaltventil weniger Platz einnehmen.

Alternativ oder zusätzlich weist der Pendelarm vorzugsweise auf der dem Pendelkopf gegenüberliegenden Seite der Lagerung ein Gegengewicht auf. Dieses Gegengewicht bewirkt zum einen, dass der Trägheitskörper in der Montageposition des Abschaltventils durch die Gewichtskraft nach unten gezogen wird, sodass die Stützfläche des Trägheitskörpers gegen die Lagerung gezwungen wird. Außerdem bewirkt das Gegengewicht, dass der Trägheitskörper schnell in seinen Ruhezustand zurückkehrt.

Vorzugsweise ragt das Gegengewicht in einen Abschnitt des Gasauslasses hinein.

Auf diese Weise kann der Schaltraum kleiner gehalten werden, wodurch eine kompaktere Bauweise des Abschaltventils möglich ist.

Vorzugsweise beträgt das Gewicht des Trägheitskörpers zwischen 5 Gramm und 20 Gramm, vorzugsweise zwischen 10 Gramm und 20 Gramm.

Es hat sich gezeigt, dass das Abschaltventil bei diesem Gewicht des Trägheitskörpers ein ideales Auslöseverhalten zeigt.

Vorzugsweise weist das Ventil ein Betätigungselement auf, mit welchem die Verschlusseinrichtung vom geschlossenen Zustand in den offenen Zustand und gleichzeitig das Abstützelement von der zweiten Position in die erste Position überführt werden können, sodass der Trägheitskörper selbstständig in seine Ruheposition zurückkehren kann. Dieses Betätigungselement kann beispielsweise entlang einer Richtung, die senkrecht zur ersten Achse ist, bewegt werden. Ferner kann das Betätigungselement eine zu dieser Richtung angeschrägte Fläche aufweisen. Diese angeschrägte Fläche kann bei Betätigung des Betätigungselements gegen eine konische Fläche der Verschlusseinrichtung drücken, sodass die Verschlusseinrichtung in den offenen Zustand gedrückt wird.

Vorzugsweise weist das Ventil ein Anzeigeelement auf, welches anzeigt, dass sich die Verschlusseinrichtung in der offenen und/oder geschlossenen Position befindet. Vorzugsweise ist das Anzeigeelement um eine zweite Achse drehbar am Ventil angebracht und weist einen Exzenter auf, der so in die Verschlusseinrichtung eingreift, dass das Anzeigeelement in der offenen Position der Verschlusseinrichtung einen ersten Drehwinkel und der geschlossenen Position der Verschlusseinrichtung einen zweiten Drehwinkel aufweist. Weiter bevorzugt führt das Anzeigeelement beim Schließen und/oder Öffnen eine Drehung aus, die größer als 0° und kleiner als 360° ist. Noch bevorzugter dreht sich das Anzeigeelement um einen Winkel, der zwischen 75° und 105° ist.

Eine weitere Ausführungsform der Erfindung betrifft ein Gasleitungssystem mit einem Abschaltventil, wie es hierin beschrieben ist.

Eine weitere Ausführungsform der Erfindung betrifft ein Fahrzeug, Flugzeug oder Boot, vorzugsweise einen Caravan oder ein Reisemobil, mit einem Abschaltventil, wie es hierin beschrieben ist, oder einem Gasleitungssystem, wie es hierin beschrieben ist.

Dabei umfasst der Begriff "Caravan" u.a. auch Wohnwagen. Der Begriff "Reisemobil" umfasst u.a. auch Wohnmobile, Motorhomes, Motor-Caravans und/oder Camping-Busse.

Weitere Ausführungsbeispiele der Erfindung werden im Rahmen der nachfolgenden Figurenbeschreibung beschrieben.

### Kurze Beschreibung der Zeichnungen

Fig. 1A und 1B zeigen ein bekanntes Abschaltventil.
Fig. 2A zeigt ein Abschaltventil gemäß einem Ausführungsbeispiel der Erfindung, welches sich in offenem Zustand befindet.
Fig. 2B zeigt das in Fig. 2A dargestellte Abschaltventil in geschlossenem Zustand.
Fig. 3 zeigt ein Abschaltventil gemäß einem weiteren Ausführungsbeispiel der Erfindung.
Fig. 4 zeigt ein Fahrzeug mit einem Gasleitungssystem und einem Abschaltventil gemäß einem Ausführungsbeispiel der Erfindung.

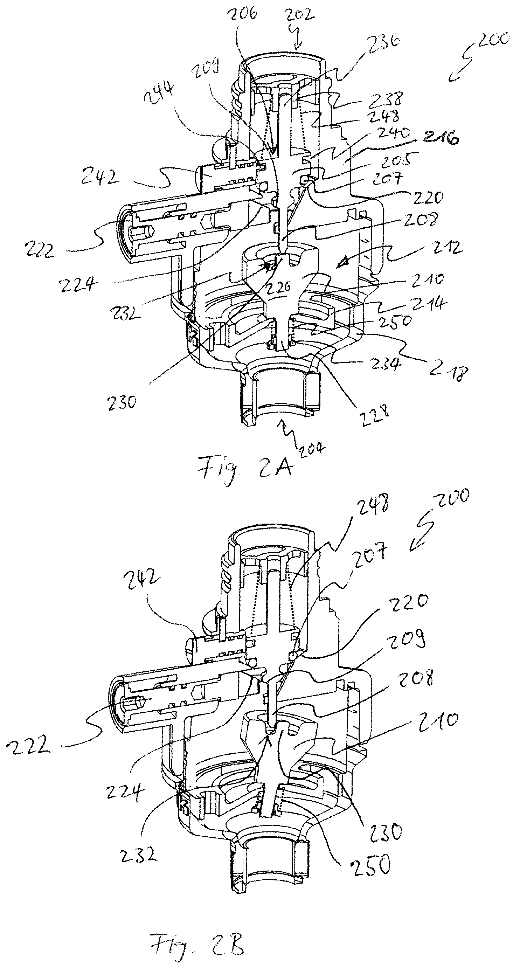

Figur 2A zeigt ein Abschaltventil 200 gemäß einem Ausführungsbeispiel der Erfindung.

Das Abschaltventil 200 weist einen Ventilkörper auf, der von einem oberen Ventilkörperteil 216 und einem unteren Ventilkörperteil 218 gebildet wird. Weiterhin umfasst das Abschaltventil 200 einen Gaseinlass 202, der in diesem Fall vom oberen Ventilkörperteil 216 gebildet wird, sowie einen Gasauslass 204, der in diesem Fall vom unteren Ventilkörperteil 218 gebildet wird.

Das Abschaltventil weist ferner eine Verschlusseinrichtung 206 auf. Die Verschlusseinrichtung 206 umfasst einen Ventilteller 205, einen Ventilstift bzw. eine Ventilnadel 208, sowie einen Ventilschaft 236, der auf der dem Ventilstift bzw. der Ventilnadel 208 gegenüberliegenden Seite des Ventiltellers 205 angeordnet ist. Der Ventilschaft 236 ist in einer Führung 238, die im Gaseinlassbereich des Ventilkörpers angeordnet, z.B. eingepresst, ist, gleitend gelagert. Weiterhin weist die Verschlusseinrichtung eine ringförmige Dichtung 207, beispielsweise einen O-Ring oder eine ringförmige Lippendichtung, auf, die um den Ventilteller 205 angeordnet ist.

Zwischen der oberen Fläche des Ventiltellers 205 und der Führung 238 befindet sich ein erstes Federelement 248, welches die Verschlusseinrichtung 206 nach unten in die geschlossene Position drückt. Das heißt, mittels des ersten Federelements 248 ist die Verschlusseinrichtung 206 in die geschlossene Position vorgespannt. In der geschlossenen Position der Verschlusseinrichtung 206 wird die um den Ventilteller 205 angeordnete Dichtung 207 gegen einen entsprechenden Ventilsitz 220, der am Ventilkörper ausgebildet ist, gepresst. Der Ventilsitz 220 kann beispielsweise als konische Fläche ausgebildet sein.

Das Abschaltventil 200 weist weiterhin einen Schaltraum 212 auf, der im unteren Ventilkörperteil 218 ausgebildet ist und von oben durch das obere Ventilkörperteil 216 abgeschlossen ist. Im Schaltraum 212 befindet sich der Trägheitskörper 210. Der Trägheitskörper 210 ist auf eine Lagerung 214 pendelnd gelagert. Das heißt, die Lagerung 214 weist eine Öffnung auf, durch die ein Pendelann 228 des Trägheitskörpers 210 hindurch ragt. Der Trägheitskörper 210 weist zudem einen Pendelkopf 226 auf, der zwischen Lagerung 214 und Ventilstift bzw. Ventilnadel 208 angeordnet ist. Der Pendelkopf 226 hat einen mittig angeordneten Vorsprung 230 sowie eine darum herum angeordnete Nut 232. Am Übergang zwischen dem Pendelkopf 226 und dem Pendelarm 228 befindet sich eine Stufe, die eine Stützfläche des Trägheitskörpers bildet. In der Ruheposition des Trägheitskörpers liegt die Stützfläche nur auf einer Kante auf, die durch die in der Lagerung 214 vorgesehene Öffnung gebildet wird und diese umgibt.

Auf der dem Pendelkopf 226 gegenüberliegenden Seite der Lagerung 214 ist ein zweites Federelement 250 angeordnet, das um den Pendelarm 228 herum angeordnet ist. Dieses zweite Federelement 250 ist an einem Ende mithilfe der Fixierung 234 an einem distalen Ende des Pendelarms 228 befestigt. Das gegenüberliegende Ende des zweiten Federelements 250 drückt gegen die untere Seite der Lagerung 214. Auf diese Weise wird der Trägheitskörper 210 durch das zweite Federelement 250 gegen die Lagerung 214 und gleichzeitig auch in eine aufrechte Position, d.h. Ruheposition des Trägheitskörpers 210, gedrückt. Mit anderen Worten wird durch das zweite Federelement 250 eine Stützfläche des Trägheitskörpers 210 gegen einen entsprechenden Teil der Lagerung 214 gedrückt. Weiterhin weist das Abschaltventil 200 ein Betätigungselement 222 auf. Das Betätigungselement 222 ist im oberen Ventilkörperteil 216 des Ventilkörpers derart gleitend angeordnet, dass es senkrecht zur Bewegungsrichtung der Verschlusseinrichtung 206 bewegbar ist. Das Betätigungselement 222 weist eine angeschrägte Fläche 224 auf, die gegenüber der Bewegungsrichtung des Betätigungselements 222 geneigt ist. Bei Betätigung des Betätigungselements 222 drückt die angeschrägte Fläche 224 gegen eine entsprechende Fläche der Verschlusseinrichtung 206, wobei die Fläche konisch ausgebildet sein kann.

Das Abschaltventil 200 weist zudem ein Anzeigeelement 242 auf. Das Anzeigeelement 242 ist drehbar im Ventilkörper, hier im oberen Ventilkörperteil 216, gelagert. Das heißt, das Anzeigeelement ist um eine Rotationsachse, die senkrecht zur Bewegungsrichtung der Verschlusseinrichtung 206 ist, drehbar. Das Anzeigeelement 242 weist einen Exzenter 244 auf, der in eine Nut 240 der Verschlusseinrichtung eingreift. Der Exzenter ist gegenüber der Rotationsachse des Anzeigeelements 242 versetzt, d.h. exzentrisch zur Rotationsachse des Anzeigeelements 242. Wenn die Verschlusseinrichtung 206 nach unten bzw. oben bewegt wird, bewirkt diese Bewegung der Verschlusseinrichtung 206 mittels des Exzenters 244 eine Drehung des Anzeigeelements 242.

In Fig. 2A ist der offene Zustand des Abschaltventils 200 dargestellt. In diesem Zustand stützt sich der Ventilstift bzw. die Ventilnadel 208 auf dem Trägheitskörper 210 ab, hier genauer auf dem Vorsprung 230 des Pendelkopfs 226 des Trägheitskörpers 210. Auf diese Weise wird die Verschlusseinrichtung 206 in der offenen Position gehalten. Das erste Federelement 248 ist im offenen Zustand des Abschaltventils 200 vorgespannt. Wenn nun eine Beschleunigung auftritt, die die vordefinierte Beschleunigung überschreitet, wird der Trägheitskörper 210 von der in Fig. 2A gezeigten Ruheposition ausgelenkt. Dieser Zustand ist in Fig. 2B gezeigt.

In Fig. 2B ist der Zustand des Abschaltventils 200 gezeigt, bei dem der Trägheitskörper 210 geneigt ist. Dieser Zustand liegt nach einer Beschleunigung, die die vordefinierte Beschleunigung überschritten hat, vor. In diesem Fall bewirkt die Vorspannung der Verschlusseinrichtung 206 mittels des ersten Federelements 248, dass die Verschlusseinrichtung 206 durch das erste Federelement 248 in die geschlossene Position gedrückt wird, da sich der Ventilstift bzw. die Ventilnadel 208 nicht mehr auf dem mittigen Vorsprung 230 abstützen kann. Der Ventilstift bzw. die Ventilnadel 208 ragt in die Nut 232 bzw. greift in die Nut 232 ein. In dieser geschlossenen Position drückt die Dichtung 207 gegen den Ventilsitz 220. Da ferner die Ventilnadel bzw. der Ventilstift 208 in die Nut 232 des Trägheitskörpers 210 eingreift, verhindert der Ventilstift bzw. die Ventilnadel 208, dass der Trägheitskörper 210 in seine Ruheposition zurückkehrt.

Bei Betätigung des Betätigungselements 222 wird die schräge Fläche 224 gegen die Fläche 209 der Verschlusseinrichtung 206 gedrückt, was eine senkrechte Bewegung der Verschlusseinrichtung 206 nach oben bewirkt. Somit wird auch der Ventilstift bzw. die Ventilnadel 208 nach oben bewegt, so dass er bzw. sie nicht mehr in die Nut 232 des Trägheitskörpers 210 eingreift. In diesem Fall drückt das zweite Federelement 250 den Trägheitskörper 210 wieder in seine aufrechte Ruheposition zurück. Bei Loslassen des Betätigungselements 222 stützt sich der Ventilstift bzw. die Ventilnadel 208 auf dem mittigen Vorsprung 230 des Trägheitskörpers 210 ab, sodass das Abschaltventil wieder im offenen Zustand gehalten wird, wie es in Fig. 2A gezeigt ist.

Ferner ist in Fig. 2B ersichtlich, dass das Anzeigeelement 242 gegenüber dem in Fig. 2A gezeigten Zustand um 90° gedreht ist. Auf diese Weise ist am Anzeigeelement ersichtlich, ob das Abschaltventil sich im geschlossenen Zustand oder im offenen Zustand befindet.

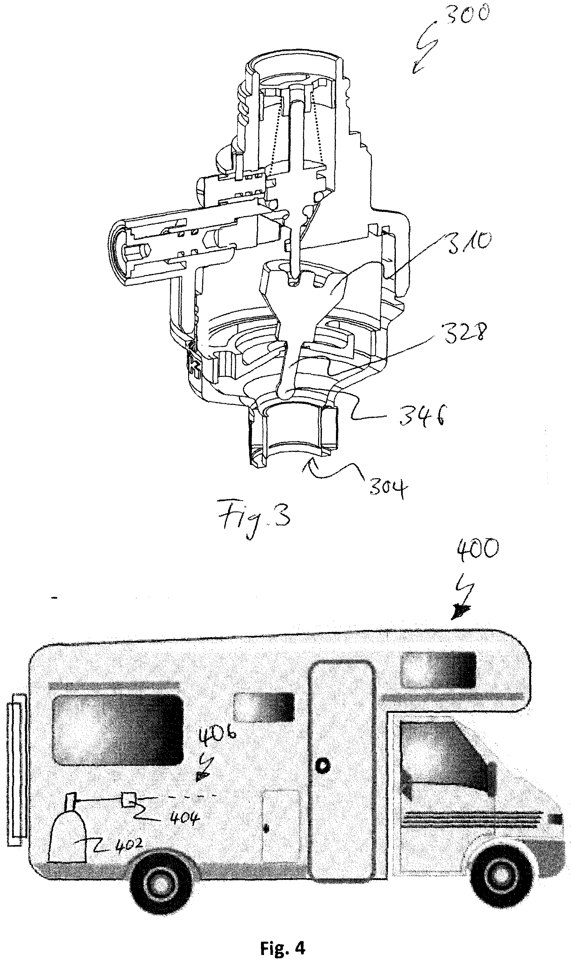

In Fig. 3 ist ein Abschaltventil 300 gemäß einem weiteren Ausführungsbeispiel der Erfindung gezeigt. Im Folgenden werden lediglich die Elemente beschrieben, die sich von dem in den Fig. 2A und 2B gezeigten Abschaltventil unterscheiden. Alle andern Elemente sind identisch zu den in Fig. 2A und 2B gezeigten Elementen.

Wie in Fig. 3 gezeigt ist, weist das Abschaltventil 300 einen Trägheitskörper 310 auf. Der Trägheitskörper 310 weist ebenfalls einen Pendelarm 328 auf, der durch eine Öffnung der Lagerung hindurchgreift. Im Gegensatz zu dem in den Fig. 3b gezeigten Abschaltventil ist am unteren, d.h. distalen, Ende des Pendelarms 328 ein Gegengewicht 346 angebracht. Dieses Gegengewicht 346 ragt vorzugsweise in den Gasauslassbereich 304 ein. Das Gegengewicht kann durch den Pendelarm 328 selbst gebildet sein. Vorzugsweise ist das Gegengewicht 346 jedoch als eine unterscheidbare Struktur am unteren Ende des Pendelarms 328 ausgebildet, wie in Fig. 3 gezeigt.

Das Gegengewicht 346 der Ausführungsform von Fig. 3 kann auch im Rahmen der Ausführungsform von Fig. 2A und 2B vorgesehen sein, d.h., auch in Kombination mit dem Federelement 250.

In Fig. 4 ist ein Fahrzeug 400 gemäß einem weiteren Ausführungsbeispiel der Erfindung gezeigt. Das Fahrzeug 400 ist in diesem Fall ein Wohnmobil, beim Fahrzeug kann es sich jedoch auch um einen Camping-Bus, einen Caravan bzw. Wohnwagen handeln. Das Fahrzeug 400 weist ein Gasleitungssystem 406 auf. Das Gasleitungssystem 406 umfasst u.a. eine Gasquelle bzw. eine Gasflasche 402 sowie ein daran angeschlossenes Abschaltventil 404 auf, das so ausgebildet ist, wie hierin beschrieben.

**Patentansprüche**

## Patentansprüche

1. Abschaltventil (200, 300), vorzugsweise Crashventil, zum Unterbrechen eines Gasdurchflusses, umfassend:
einen Gaseinlass (202);
einen Gasauslass (204);
eine in Strömungsrichtung zwischen Gaseinlass und Gasauslass angeordnete Verschlusseinrichtung (206);
einen pendelnd gelagerten Trägheitskörper (210);
wobei die Verschlusseinrichtung (206) entlang einer Bewegungsrichtung von einer offenen Position in eine geschlossene Position bewegbar ist;
wobei die Verschlusseinrichtung (206) in den geschlossenen Zustand vorgespannt ist;
wobei die Verschlusseinrichtung (206) ein Abstützelement, vorzugsweise eine in der Bewegungsrichtung vorstehende Struktur, aufweist, das zusammen mit der Verschlusseinrichtung (206) bewegt wird, so dass das Abstützelement im offenen Zustand eine erste Position und im geschlossenen Zustand eine zweite Position einnimmt;
wobei der Trägheitskörper (210) eingerichtet ist, eine Ruheposition, in der der Trägheitskörper (210) parallel zu einer durch die Bewegungsrichtung der Verschlusseinrichtung (206) definierten ersten Achse ausgerichtet ist, und eine ausgelenkte Position, in der der Trägheitskörper (210) bezüglich der ersten Achse geneigt ist, einzunehmen;
wobei der Trägheitskörper (210) eingerichtet ist, selbständig von der ausgelenkten Position in die Ruheposition zurückzukehren;
wobei der Trägheitskörper (210) in der Ruheposition das Abstützelement in der ersten Position hält, so dass die Verschlusseinrichtung (206) daran gehindert wird, in die geschlossene Position zurückzukehren;
wobei der Trägheitskörper (210) eingerichtet ist, dass er bei Überschreiten einer vorbestimmten Beschleunigung durch eine auftretende Beschleunigungskraft von der Ruheposition in die ausgelenkte Position bewegt wird, so dass das Abstützelement die zweite Position und die Verschlusseinrichtung den geschlossenen Zustand einnehmen; wobei der Trägheitskörper (210) zwischen Gaseinlass (202) und Gasauslass (204) im Strömungspfad angeordnet ist;
wobei, wenn sich der Trägheitskörper (210) in der ausgelenkten Position und das Abstützelement in der zweiten Position befinden, das Abstützelement den Trägheitskörper (210) daran hindert, in die Ruheposition zurückzukehren; und
wobei, wenn sich der Trägheitskörper (210) in der ausgelenkten Position und das Abstützelement in der zweiten Position befinden, das Abstützelement in den Trägheitskörper (210), vorzugsweise eine Nut (232) des Trägheitskörpers (210), eingreift, um den Trägheitskörper (210) daran zu hindern, in die Ruheposition zurückzukehren.

2. Abschaltventil (200, 300), vorzugsweise Crashventil, zum Unterbrechen eines Gasdurchflusses, umfassend:
einen Gaseinlass (202);
einen Gasauslass (204);
eine in Strömungsrichtung zwischen Gaseinlass und Gasauslass angeordnete Verschlusseinrichtung (206);
einen pendelnd gelagerten Trägheitskörper (210);
wobei die Verschlusseinrichtung (206) entlang einer Bewegungsrichtung von einer offenen Position in eine geschlossene Position bewegbar ist;
wobei die Verschlusseinrichtung (206) in den geschlossenen Zustand vorgespannt ist;
wobei die Verschlusseinrichtung (206) ein Abstützelement, vorzugsweise eine in der Bewegungsrichtung vorstehende Struktur, aufweist, das zusammen mit der Verschlusseinrichtung (206) bewegt wird, so dass das Abstützelement im offenen Zustand eine erste Position und im geschlossenen Zustand eine zweite Position einnimmt;
wobei der Trägheitskörper (210) eingerichtet ist, eine Ruheposition, in der der Trägheitskörper (210) parallel zu einer durch die Bewegungsrichtung der Verschlusseinrichtung (206) definierten ersten Achse ausgerichtet ist, und eine ausgelenkte Position, in der der Trägheitskörper (210) bezüglich der ersten Achse geneigt ist, einzunehmen;
wobei der Trägheitskörper (210) eingerichtet ist, selbständig von der ausgelenkten Position in die Ruheposition zurückzukehren;
wobei der Trägheitskörper (210) in der Ruheposition das Abstützelement in der ersten Position hält, so dass die Verschlusseinrichtung (206) daran gehindert wird, in die geschlossene Position zurückzukehren;
wobei der Trägheitskörper (210) eingerichtet ist, dass er bei Überschreiten einer vorbestimmten Beschleunigung durch eine auftretende Beschleunigungskraft von der Ruheposition in die ausgelenkte Position bewegt wird, so dass das Abstützelement die zweite Position und die Verschlusseinrichtung den geschlossenen Zustand einnehmen; wobei der Trägheitskörper (210) zwischen Gaseinlass (202) und Gasauslass (204) im Strömungspfad angeordnet ist;
wobei, wenn sich der Trägheitskörper (210) in der ausgelenkten Position und das Abstützelement in der zweiten Position befinden, das Abstützelement den Trägheitskörper (210) daran hindert, in die Ruheposition zurückzukehren;
wobei das Abschaltventil einen Ventilkörper aufweist;
wobei der Ventilkörper einen Schaltraum (212) für den Trägheitskörper (210) aufweist;
wobei der Trägheitskörper (210) auf einer im Schaltraum (212) ausgebildeten Lagerung (214) pendelnd gelagert ist;
wobei die Lagerung (214) eine Öffnung aufweist, durch die ein Abschnitt des Trägheitskörpers (210) hindurch ragt;
wobei der Trägheitskörper (210) einen zwischen der Lagerung und dem vorstehenden Teil angeordneten Pendelkopf (226) und einen durch die Öffnung der Lagerung hindurch ragenden Pendelarm (228) aufweist; und
wobei ein Federelement (250) auf der dem Pendelkopf (226) gegenüberliegenden Seite der Lagerung (214) um den Pendelarm (228) herum angeordnet ist und der Pendelarm (228) ein Fixierelement (234) aufweist, um das Federelement (250) am Pendelarm (228) zu fixieren, so dass das Federelement (250) den Trägheitskörper (210) gegen die Lagerung (214) spannt.

3. Abschaltventil (200, 300), vorzugsweise Crashventil, zum Unterbrechen eines Gasdurchflusses, umfassend:
einen Gaseinlass (202);
einen Gasauslass (204);
eine in Strömungsrichtung zwischen Gaseinlass und Gasauslass angeordnete Verschlusseinrichtung (206);
einen pendelnd gelagerten Trägheitskörper (210);
wobei die Verschlusseinrichtung (206) entlang einer Bewegungsrichtung von einer offenen Position in eine geschlossene Position bewegbar ist;
wobei die Verschlusseinrichtung (206) in den geschlossenen Zustand vorgespannt ist;
wobei die Verschlusseinrichtung (206) ein Abstützelement, vorzugsweise eine in der Bewegungsrichtung vorstehende Struktur, aufweist, das zusammen mit der Verschlusseinrichtung (206) bewegt wird, so dass das Abstützelement im offenen Zustand eine erste Position und im geschlossenen Zustand eine zweite Position einnimmt;
wobei der Trägheitskörper (210) eingerichtet ist, eine Ruheposition, in der der Trägheitskörper (210) parallel zu einer durch die Bewegungsrichtung der Verschlusseinrichtung (206) definierten ersten Achse ausgerichtet ist, und eine ausgelenkte Position, in der der Trägheitskörper (210) bezüglich der ersten Achse geneigt ist, einzunehmen;
wobei der Trägheitskörper (210) eingerichtet ist, selbständig von der ausgelenkten Position in die Ruheposition zurückzukehren;
wobei der Trägheitskörper (210) in der Ruheposition das Abstützelement in der ersten Position hält, so dass die Verschlusseinrichtung (206) daran gehindert wird, in die geschlossene Position zurückzukehren;
wobei der Trägheitskörper (210) eingerichtet ist, dass er bei Überschreiten einer vorbestimmten Beschleunigung durch eine auftretende Beschleunigungskraft von der Ruheposition in die ausgelenkte Position bewegt wird, so dass das Abstützelement die zweite Position und die Verschlusseinrichtung den geschlossenen Zustand einnehmen;
wobei der Trägheitskörper (210) zwischen Gaseinlass (202) und Gasauslass (204) im Strömungspfad angeordnet ist;
wobei, wenn sich der Trägheitskörper (210) in der ausgelenkten Position und das Abstützelement in der zweiten Position befinden, das Abstützelement den Trägheitskörper (210) daran hindert, in die Ruheposition zurückzukehren;
wobei das Ventil ein Betätigungselement (222) aufweist, mit welchem die Verschlusseinrichtung (206) vom geschlossenen Zustand in den offenen Zustand und gleichzeitig das Abstützelement von der zweiten Position in die erste Position überführt werden können, so dass der Trägheitskörper (210) selbständig in seine Ruheposition zurückkehren kann; und
wobei das Betätigungselement (222) entlang einer Richtung, die senkrecht zur ersten Achse ist, bewegt werden kann.

4. Abschaltventil (200, 300) nach einem der vorangehenden Ansprüche,
wobei der Trägheitskörper (210) bezüglich der ersten Achse in jede Richtung auslenkbar ist.

5. Abschaltventil (200, 300) nach Anspruch 1 oder 3,
wobei das Abschaltventil einen Ventilkörper aufweist;
wobei der Ventilkörper einen Schaltraum (212) für den Trägheitskörper (210) aufweist;
wobei die Verschlusseinrichtung (206) einen Ventilteller (205) und einen entsprechenden Ventilsitz (220) am Ventilkörper aufweist;
wobei das Abstützelement ein Ventilstift (208) oder eine Ventilnadel ist, der bzw. die in der Bewegungsrichtung der Verschlusseinrichtung (206) vorsteht; und
wobei der Ventilstift (208) vorzugsweise integral am Ventilteller (205) ausgebildet ist.

6. Abschaltventil (200, 300) nach Anspruch 5,
wobei der Strömungspfad zwischen Gaseinlass (202) und Gasauslass (204) zumindest teilweise durch den Schaltraum (212) führt.

7. Abschaltventil (200, 300) nach Anspruch 2 oder 3,
wobei, wenn sich der Trägheitskörper (210) in der ausgelenkten Position und das Abstützelement in der zweiten Position befinden, das Abstützelement in den Trägheitskörper (210), vorzugsweise eine Nut (232) des Trägheitskörpers (210), eingreift, um den Trägheitskörper (210) daran zu hindern, in die Ruheposition zurückzukehren.

8. Abschaltventil (200, 300) nach Anspruch 5,
wobei der Trägheitskörper (210) auf einer im Schaltraum (212) ausgebildeten Lagerung (214) pendelnd gelagert ist;
wobei die Lagerung (214) eine Öffnung aufweist, durch die ein Abschnitt des Trägheitskörpers (210) hindurch ragt; und
wobei die Öffnung vorzugsweise am Schnittpunkt der Lagerung (214) mit der ersten Achse liegt.

9. Abschaltventil (200, 300) nach Anspruch 2 oder 8, wobei die Lagerung (214) eine entlang der ersten Achse und zur vorstehenden Struktur hin zulaufende konische Fläche aufweist.

10. Abschaltventil (200, 300) nach einem der vorangehenden Ansprüche, wobei der Trägheitskörper (210) bezüglich einer Symmetrieachse im Wesentlichen rotationssymmetrisch ist und die Symmetrieachse in der Ruheposition des Trägheitskörpers (210) parallel zur ersten Achse ist.

11. Abschaltventil (200, 300) nach Anspruch 8,
wobei der Trägheitskörper (210) einen zwischen der Lagerung und dem vorstehenden Teil angeordneten Pendelkopf (226) und einen durch die Öffnung der Lagerung hindurch ragenden Pendelarm (228) aufweist; und
wobei der Pendelkopf (226) vorzugsweise auf dessen Oberseite einen mittig angeordneten Vorsprung (230) und eine darum herum angeordnete Nut (232) aufweist, so dass das Abstützelement im offenen Zustand des Ventils auf dem Vorsprung (230) des Pendelkopfs (226) abgestützt ist und das Abstützelement im geschlossenen Zustand des Ventils in die Nut (232) des Pendelkopfs (226) eingreift; und
wobei der Schwerpunkt des Trägheitskörpers (210) vorzugsweise zwischen der Lagerung (214) und einem oberen Ende des Pendelkopfs liegt.

12. Abschaltventil (200, 300) nach Anspruch 11,
wobei ein Federelement (250) auf der dem Pendelkopf (226) gegenüberliegenden Seite der Lagerung (214) um den Pendelarm (228) herum angeordnet ist und der Pendelarm (228) ein Fixierelement (234) aufweist, um das Federelement (250) am Pendelarm (228) zu fixieren, so dass das Federelement (250) den Trägheitskörper (210) gegen die Lagerung (214) spannt; und/oder
wobei der Pendelarm (228) auf der dem Pendelkopf (226) gegenüberliegenden Seite der Lagerung ein Gegengewicht (346) aufweist und das Gegengewicht (346) vorzugsweise in einen Abschnitt des Gasauslasses (204) hineinragt.

13. Abschaltventil (200, 300) nach einem der vorangehenden Ansprüche,
wobei das Gewicht des Trägheitskörpers (210) zwischen 5g und 20g, vorzugsweise zwischen 10g und 20g, beträgt.

14. Abschaltventil (200, 300) nach Anspruch 1 oder 2,
wobei das Ventil ein Betätigungselement (222) aufweist, mit welchem die Verschlusseinrichtung (206) vom geschlossenen Zustand in den offenen Zustand und gleichzeitig das Abstützelement von der zweiten Position in die erste Position überführt werden können, so dass der Trägheitskörper (210) selbständig in seine Ruheposition zurückkehren kann;

15. Abschaltventil (200, 300) nach einem der vorangehenden Ansprüche,
wobei das Ventil ein Anzeigeelement (242) aufweist, welches anzeigt, dass sich die Verschlusseinrichtung (206) in der offenen und/oder geschlossenen Position befindet;
wobei das Anzeigeelement (242) vorzugsweise um eine zweite Achse drehbar am Ventil angebracht ist und einen Exzenter (244) aufweist, der so in die Verschlusseinrichtung (206) eingreift, dass das Anzeigeelement (242) in der offenen Position der Verschlusseinrichtung (206) einen ersten Drehwinkel und in der geschlossenen Position der Verschlusseinrichtung einen zweiten Drehwinkel aufweist.

16. Fahrzeug (400), vorzugsweise ein Caravan oder Reisemobil, mit einem Abschaltventil (200, 300) nach einem der Ansprüche 1 bis 15.

## Claims

1. A shutoff valve (200, 300), preferably a crash valve, for interrupting a gas flow, comprising:
a gas inlet (202);
a gas outlet (204);
a closure device (206) disposed in the flow direction between the gas inlet and the gas outlet;
an inertia body (210) mounted in a pendulum fashion;
wherein the closure device (206) is movable from an open position into a closed position along a direction of movement;
wherein the closure device (206) is biased in the closed state;
wherein the closure device (206) comprises a supporting member, preferably a structure protruding in the direction of movement, which is moved together with the closure device (206) so that the supporting member takes a first position in the open state and a second position in the closed state;
wherein the inertia body (210) is configured to take an idle position in which the inertia body (210) is aligned in parallel to a first axis defined by the direction of movement of the closure device (206) and a deflected position in which the inertia body (210) is inclined with respect to the first axis;
wherein the inertia body (210) is configured to return on its own from the deflected position to the idle position;
wherein in the idle position the inertia body (210) holds the supporting member in the first position so that the closure device (206) is prevented from returning to the closed position;
wherein the inertia body (210) is configured such that it is moved from the idle position into the deflected position by an occurring acceleration force when a predetermined acceleration is exceeded so that the supporting member assumes the second position and the closure device assumes the closed state;
wherein the inertia body (210) is disposed between the gas inlet (202) and the gas outlet (204) in the flow path;
wherein when the inertia body (210) is in the deflected position and the supporting member is in the second position, the supporting member prevents the inertia body (210) from returning to the idle position; and
wherein when the inertia body (210) is in the deflected position and the supporting member is in the second position, the supporting member engages with the inertia body (210), preferably a groove (232) of the inertia body (210), in order to prevent the inertia body (210) from returning to the idle position.

2. A shutoff valve (200, 300), preferably a crash valve, for interrupting a gas flow, comprising:
a gas inlet (202);
a gas outlet (204);
a closure device (206) disposed in the flow direction between the gas inlet and the gas outlet;
an inertia body (210) mounted in a pendulum fashion;
wherein the closure device (206) is movable from an open position into a closed position along a direction of movement;
wherein the closure device (206) is biased in the closed state;
wherein the closure device (206) comprises a supporting member, preferably a structure protruding in the direction of movement, which is moved together with the closure device (206) so that the supporting member takes a first position in the open state and a second position in the closed state;
wherein the inertia body (210) is configured to take an idle position in which the inertia body (210) is aligned in parallel to a first axis defined by the direction of movement of the closure device (206) and a deflected position in which the inertia body (210) is inclined with respect to the first axis;
wherein the inertia body (210) is configured to return on its own from the deflected position to the idle position;
wherein in the idle position the inertia body (210) holds the supporting member in the first position so that the closure device (206) is prevented from returning to the closed position;
wherein the inertia body (210) is configured such that it is moved from the idle position into the deflected position by an occurring acceleration force when a predetermined acceleration is exceeded so that the supporting member assumes the second position and the closure device assumes the closed state; wherein the inertia body (210) is disposed between the gas inlet (202) and the gas outlet (204) in the flow path;
wherein when the inertia body (210) is in the deflected position and the supporting member is in the second position, the supporting member prevents the inertia body (210) from returning to the idle position;
wherein the shutoff valve comprises a valve body;
wherein the valve body comprises a control room (212) for the inertia body (210);
wherein the inertia body (210) is mounted on a bearing (214) in a pendulum fashion, said bearing (214) being formed in the control room (212);
wherein the bearing (214) comprises an opening through which a section of the inertia body (210) protrudes;
wherein the bearing (214) comprises an opening through which a section of the inertia body (210) protrudes;
wherein the inertia body (210) comprises a pendulum head (226) disposed between the bearing and the protruding part, and a pendulum arm (228) protruding through the opening of the bearing; and
wherein a spring element (250) is arranged around the pendulum arm (228) on the side of the bearing (214) opposite the pendulum head (226), and the pendulum arm (228) comprises a fixing element (234) in order to fix the spring element (250) at the pendulum arm (228) so that the spring element (250) clamps the inertia body (210) against the bearing (214).

3. A shutoff valve (200, 300), preferably a crash valve, for interrupting a gas flow, comprising:
a gas inlet (202);
a gas outlet (204);
a closure device (206) disposed in the flow direction between the gas inlet and the gas outlet;
an inertia body (210) mounted in a pendulum fashion;
wherein the closure device (206) is movable from an open position into a closed position along a direction of movement;
wherein the closure device (206) is biased in the closed state;
wherein the closure device (206) comprises a supporting member, preferably a structure protruding in the direction of movement, which is moved together with the closure device (206) so that the supporting member takes a first position in the open state and a second position in the closed state;
wherein the inertia body (210) is configured to take an idle position in which the inertia body (210) is aligned in parallel to a first axis defined by the direction of movement of the closure device (206) and a deflected position in which the inertia body (210) is inclined with respect to the first axis;
wherein the inertia body (210) is configured to return on its own from the deflected position to the idle position;
wherein in the idle position the inertia body (210) holds the supporting member in the first position so that the closure device (206) is prevented from returning to the closed position;
wherein the inertia body (210) is configured such that it is moved from the idle position into the deflected position by an occurring acceleration force when a predetermined acceleration is exceeded so that the supporting member assumes the second position and the closure device assumes the closed state;
wherein the inertia body (210) is disposed between the gas inlet (202) and the gas outlet (204) in the flow path;
wherein when the inertia body (210) is in the deflected position and the supporting member is in the second position, the supporting member prevents the inertia body (210) from returning to the idle position;
wherein the valve comprises an actuation element (222) with which the closure device (206) can be brought from the closed state into the open state and, at the same time, the supporting member can be brought from the second position into the first position so that the inertia body (210) can return to its idle position on its own; and
wherein the actuation element (222) can be moved along a direction that is perpendicular to the first axis.

4. The shutoff valve (200, 300) according to any preceding claim,
wherein the inertia body (210) is deflectable in any direction with respect to the first axis.

5. The shutoff valve (200, 300) according to claim 1 or 3,
wherein the shutoff valve comprises a valve body;
wherein the valve body comprises a control room (212) for the inertia body (210);
wherein the closure device (206) comprises a valve disk (205) and a corresponding valve seat (220) at the valve body;
wherein the supporting member is a valve pin (208) or a valve needle which protrudes in the direction of movement of the closure device (206); and
wherein the valve pin (208) is formed at the valve disk (205) preferably integrally.

6. The shutoff valve (200, 300) according to claim 5,
wherein the flow path between the gas inlet (202) and the gas outlet (204) leads at least partially through the control room (212).

7. The shutoff valve (200, 300) according to claim 2 or 3,
wherein, when the inertia body (210) is in the deflected position and the supporting member is in the second position, the supporting element engages with the inertia body (210), preferably a groove (232) of the inertia body (210), in order to prevent the inertia body (210) from returning to the idle position.

8. The shutoff valve (200, 300) according to claim 5,
wherein the inertia body (210) is mounted on a bearing (214) in a pendulum fashion, said bearing (214) being formed in the control room (212);
wherein the bearing (214) comprises an opening through which a section of the inertia body (210) protrudes; and
wherein the opening is located preferably at the intersection point of the bearing (214) and the first axis.

9. The shutoff valve (200, 300) according to claim 2 or 8,
wherein the bearing (214) has a conical surface tapering along the first axis and toward the protruding structure.

10. The shutoff valve (200, 300) according to any one of the preceding claims,
wherein the inertia body (210) is substantially rotationally symmetrical with respect to an axis of symmetry, and the axis of symmetry is parallel to the first axis in the idle position of the inertia body (210).

11. The shutoff valve (200, 300) according to claim 8,
wherein the inertia body (210) comprises a pendulum head (226) disposed between the bearing and the protruding part, and a pendulum arm (228) protruding through the opening of the bearing; and
wherein the pendulum head (226) comprises, preferably on its upper side, a centrally disposed protrusion (230) and a groove (232) arranged around it so that the supporting member is supported on the protrusion (230) of the pendulum head (226) in the open state of the valve and the supporting member engages with the groove (232) of the pendulum head (226) in the closed state of the valve; and
wherein the gravity center of the inertia body (210) is preferably between the bearing (214) and an upper end of the pendulum head.

12. The shutoff valve (200, 300) according to claim 11,
wherein a spring element (250) is arranged around the pendulum arm (228) on the side of the bearing (214) opposite the pendulum head (226), and the pendulum arm (228) comprises a fixing element (234) in order to fix the spring element (250) at the pendulum arm (228) so that the spring element (250) clamps the inertia body (210) against the bearing (214); and/or
wherein the pendulum arm (228) comprises a counterweight (346) on the side of the bearing opposite the pendulum head (226), and the counterweight (346) protrudes preferably into a section of the gas outlet (204).

13. The shutoff valve (200, 300) according to any one of the preceding claims,
wherein the weight of the inertia body (210) is between 5g and 20g, preferably between 10g and 20g.

14. The shutoff valve (200, 300) according to claim 1 or 2,
wherein the valve comprises an actuation element (222) with which the closure device (206) can be brought from the closed state into the open state and, at the same time, the supporting member can be brought from the second position into the first position so that the inertia body (210) can return to its idle position on its own.

15. The shutoff valve (200, 300) according to any one of the preceding claims, wherein the valve comprises a display element (242) displaying that the closure device (206) is in the open and/or closed position;
wherein the display element (242) is mounted to the valve preferably rotatably around a second axis and comprises an eccentric tappet (244) engaging with the closure device (206) such that the display element (242) has a first angle of rotation in the open position of the closure device (206) and a second angle of rotation in the closed position of the closure device.

16. A vehicle (400), preferably a caravan or a motor home, with a shutoff valve (200, 300) according to any one of claims 1 to 15.

## Revendications

1. Soupape d'arrêt (200, 300), de préférence soupape d'impact, pour l'interruption d'un débit de gaz, comprenant :
une entrée de gaz (202) ;
une sortie de gaz (204) ;
un dispositif de fermeture (206) disposé dans le sens d'écoulement entre l'entrée de gaz et la sortie de gaz ;
un corps inertiel (210) monté de manière oscillante ;
dans laquelle le dispositif de fermeture (206) est mobile le long d'un sens de mouvement d'une position ouverte dans une position fermée ;
dans laquelle le dispositif de fermeture (206) est précontraint dans l'état fermé ;
dans laquelle le dispositif de fermeture (206) présente un élément d'appui, de préférence une structure faisant saillie dans le sens de mouvement, qui est déplacé conjointement avec le dispositif de fermeture (206), de sorte que l'élément d'appui occupe dans l'état ouvert une première position et dans l'état fermé une deuxième position ;
dans laquelle le corps inertiel (210) est conçu pour occuper une position de repos, dans laquelle le corps inertiel (210) est orienté parallèlement à un premier axe défini par le sens de mouvement du dispositif de fermeture (206), et une position déviée, dans laquelle le corps inertiel (210) est incliné par rapport au premier axe ;
dans laquelle le corps inertiel (210) est conçu pour revenir automatiquement de la position déviée dans la position de repos ;
dans laquelle le corps inertiel (210) dans la position de repos maintient l'élément d'appui dans la première position, de sorte que le dispositif de fermeture (206) est empêché de revenir dans la position fermée ;
dans laquelle le corps inertiel (210) est conçu de sorte que lors du dépassement d'une accélération prédéfinie par une force d'accélération se produisant il est déplacé de la position de repos dans la position déviée, de sorte que l'élément d'appui occupe la deuxième position et le dispositif de fermeture l'état fermé ;
dans laquelle le corps inertiel (210) est disposé entre l'entrée de gaz (202) et la sortie de gaz (204) dans le trajet d'écoulement ;
dans laquelle, lorsque le corps inertiel (210) se trouve dans la position déviée et l'élément d'appui dans la deuxième position, l'élément d'appui empêche le corps inertiel (210) de revenir dans la position de repos ; et
dans laquelle, lorsque le corps inertiel (210) se trouve dans la position déviée et l'élément d'appui dans la deuxième position, l'élément d'appui s'insère dans le corps inertiel (210), de préférence une rainure (232) du corps inertiel (210), afin d'empêcher le corps inertiel (210) de revenir dans la position de repos.

2. Soupape d'arrêt (200, 300), de préférence soupape d'impact, pour l'interruption d'un débit de gaz, comprenant :
une entrée de gaz (202) ;
une sortie de gaz (204) ;
un dispositif de fermeture (206) disposé dans le sens d'écoulement entre l'entrée de gaz et la sortie de gaz ;
un corps inertiel (210) monté de manière oscillante ;
dans laquelle le dispositif de fermeture (206) est mobile le long d'un sens de mouvement d'une position ouverte dans une position fermée ;
dans laquelle le dispositif de fermeture (206) est précontraint dans l'état fermé ;
dans laquelle le dispositif de fermeture (206) présente un élément d'appui, de préférence une structure faisant saillie dans le sens de mouvement, qui est déplacé conjointement avec le dispositif de fermeture (206), de sorte que l'élément d'appui occupe dans l'état ouvert une première position et dans l'état fermé une deuxième position ;
dans laquelle le corps inertiel (210) est conçu pour occuper une position de repos, dans laquelle le corps inertiel (210) est orienté parallèlement à un premier axe défini par le sens de mouvement du dispositif de fermeture (206), et une position déviée, dans laquelle le corps inertiel (210) est incliné par rapport au premier axe ;
dans laquelle le corps inertiel (210) est conçu pour revenir automatiquement de la position déviée dans la position de repos ;
dans laquelle le corps inertiel (210) dans la position de repos maintient l'élément d'appui dans la première position, de sorte que le dispositif de fermeture (206) est empêché de revenir dans la position fermée ;
dans laquelle le corps inertiel (210) est conçu de sorte que lors du dépassement d'une accélération prédéfinie par une force d'accélération se produisant il est déplacé de la position de repos dans la position déviée, de sorte que l'élément d'appui occupe la deuxième position et le dispositif de fermeture l'état fermé ;
dans laquelle le corps inertiel (210) est disposé entre l'entrée de gaz (202) et la sortie de gaz (204) dans le trajet d'écoulement ;
dans laquelle, lorsque le corps inertiel (210) se trouve dans la position déviée et l'élément d'appui dans la deuxième position, l'élément d'appui empêche le corps inertiel (210) de revenir dans la position de repos ;
dans laquelle la soupape d'arrêt présente un corps de soupape ;
dans laquelle le corps de soupape présente un espace de commutation (212) pour le corps inertiel (210) ;
dans laquelle le corps inertiel (210) est monté de manière oscillante sur un support (214) réalisé dans l'espace de commutation (212) ;
dans laquelle le support (214) présente une ouverture, à travers laquelle une partie du corps inertiel (210) fait saillie ;
dans laquelle le corps inertiel (210) présente une tête oscillante (226) disposée entre le support et la partie en saillie et un bras oscillant (228) faisant saillie à travers l'ouverture du support ; et
dans laquelle un élément ressort (250) est disposé sur la face du support (214) opposée à la tête oscillante (226) autour du bras oscillant (228) et le bras oscillant (228) présente un élément de fixation (234), afin de fixer l'élément ressort (250) sur le bras oscillant (228), de sorte que l'élément ressort (250) serre le corps inertiel (210) contre le support (214).

3. Soupape d'arrêt (200, 300), de préférence soupape d'impact, pour l'interruption d'un débit de gaz, comprenant :
une entrée de gaz (202) ;
une sortie de gaz (204) ;
un dispositif de fermeture (206) disposé dans le sens d'écoulement entre l'entrée de gaz et la sortie de gaz ;
un corps inertiel (210) monté de manière oscillante ;
dans laquelle le dispositif de fermeture (206) est mobile le long d'un sens de mouvement d'une position ouverte dans une position fermée ;
dans laquelle le dispositif de fermeture (206) est précontraint dans l'état fermé ;
dans laquelle le dispositif de fermeture (206) présente un élément d'appui, de préférence une structure faisant saillie dans le sens de mouvement, qui est déplacé conjointement avec le dispositif de fermeture (206), de sorte que l'élément d'appui occupe dans l'état ouvert une première position et dans l'état fermé une deuxième position ;
dans laquelle le corps inertiel (210) est conçu pour occuper une position de repos, dans laquelle le corps inertiel (210) est orienté parallèlement à un premier axe défini par le sens de mouvement du dispositif de fermeture (206), et une position déviée, dans laquelle le corps inertiel (210) est incliné par rapport au premier axe ;
dans laquelle le corps inertiel (210) est conçu pour revenir automatiquement de la position déviée dans la position de repos ;
dans laquelle le corps inertiel (210) dans la position de repos maintient l'élément d'appui dans la première position, de sorte que le dispositif de fermeture (206) est empêché de revenir dans la position fermée ;
dans laquelle le corps inertiel (210) est conçu de sorte que lors du dépassement d'une accélération prédéfinie par une force d'accélération se produisant il est déplacé de la position de repos dans la position déviée, de sorte que l'élément d'appui occupe la deuxième position et le dispositif de fermeture l'état fermé ;
dans laquelle le corps inertiel (210) est disposé entre l'entrée de gaz (202) et la sortie de gaz (204) dans le trajet d'écoulement ;
dans laquelle, lorsque le corps inertiel (210) se trouve dans la position déviée et l'élément d'appui dans la deuxième position, l'élément d'appui empêche le corps inertiel (210) de revenir dans la position de repos ;
dans laquelle la soupape présente un élément d'actionnement (222), avec lequel le dispositif de fermeture (206) peut être amené de l'état fermé dans l'état ouvert et simultanément l'élément d'appui peut être amené de la deuxième position dans la première position, de sorte que le corps inertiel (210) peut revenir automatiquement dans sa position de repos ; et
dans laquelle un élément d'actionnement (222) peut être déplacé le long d'une direction perpendiculaire au premier axe.

4. Soupape d'arrêt (200, 300) selon l'une quelconque des revendications précédentes, dans laquelle le corps inertiel (210) peut être dévié par rapport au premier axe dans chaque direction.

5. Soupape d'arrêt (200, 300) selon la revendication 1 ou la revendication 3,
dans laquelle la soupape d'arrêt présente un corps de soupape ;
dans laquelle le corps de soupape présente un espace de commutation (212) pour le corps inertiel (210) ;
dans laquelle le dispositif de fermeture (206) présente une tête de soupape (205) et un siège de soupape (220) correspondant sur le corps de soupape ;
dans laquelle l'élément d'appui est une tige de soupape (208) ou un pointeau de soupape, qui fait saillie dans le sens de mouvement du dispositif de fermeture (206) ; et
dans laquelle la tige de soupape (208) est réalisée de préférence d'un seul tenant sur la tête de soupape (205).

6. Soupape d'arrêt (200, 300) selon la revendication 5,
dans laquelle le trajet d'écoulement mène entre l'entrée de gaz (202) et la sortie de gaz (204) au moins en partie à travers l'espace de commutation (212).

7. Soupape d'arrêt (200, 300) selon la revendication 2 ou la revendication 3,
dans laquelle, lorsque le corps inertiel (210) se trouve dans la position déviée et l'élément d'appui dans la deuxième position, l'élément d'appui s'insère dans le corps inertiel (210), de préférence une rainure (232) du corps inertiel (210), afin d'empêcher le corps inertiel (210) de revenir dans la position de repos.

8. Soupape d'arrêt (200, 300) selon la revendication 5,
dans laquelle le corps inertiel (210) est monté de manière oscillante sur un support (214) réalisé dans l'espace de commutation (212) ;
dans laquelle le support (214) présente une ouverture, à travers laquelle une partie du corps inertiel (210) fait saillie ; et
dans laquelle l'ouverture se situe de préférence sur le point d'intersection du support (214) avec le premier axe.

9. Soupape d'arrêt (200, 300) selon la revendication 2 ou la revendication 8,
dans laquelle le support (214) présente une surface conique le long du premier axe et se terminant vers la structure en saillie.

10. Soupape d'arrêt (200, 300) selon l'une quelconque des revendications précédentes,
dans laquelle le corps inertiel (210) est sensiblement à symétrie de rotation par rapport à un axe de symétrie et l'axe de symétrie dans la position de repos du corps inertiel (210) est parallèle au premier axe.

11. Soupape d'arrêt (200, 300) selon la revendication 8,
dans laquelle le corps inertiel (210) présente une tête oscillante (226) disposée entre le support et la partie en saillie et un bras oscillant (228) faisant saillie à travers l'ouverture du support ; et
dans laquelle la tête oscillante (226) présente de préférence sur la face supérieure de celle-ci une partie saillante (230) disposée au centre et une rainure (232) disposée autour de celle-ci, de sorte que l'élément d'appui dans l'état ouvert de la soupape est en appui sur la partie saillante (230) de la tête oscillante (226) et l'élément d'appui dans l'état fermé de la soupape s'insère dans la rainure (232) de la tête oscillante (226) ; et
dans laquelle le centre de gravité du corps inertiel (210) se situe de préférence entre le support (214) et une extrémité supérieure de la tête oscillante.

12. Soupape d'arrêt (200, 300) selon la revendication 11,
dans laquelle un élément ressort (250) est disposé sur la face du support (214) opposée à la tête oscillante (226) autour du bras oscillant (228) et le bras oscillant (228) présente un élément de fixation (234), afin de fixer l'élément ressort (250) sur le bras oscillant (228), de sorte que l'élément ressort (250) serre le corps inertiel (210) contre le support (214) ; et/ou
dans laquelle le bras oscillant (228) présente sur la face du support opposée à la tête oscillante (226) un contrepoids (346) et le contrepoids (346) fait saillie de préférence dans une partie de la sortie de gaz (204).

13. Soupape d'arrêt (200, 300) selon l'une quelconque des revendications précédentes,
dans laquelle le poids du corps inertiel (210) est compris entre 5 g et 20 g, de préférence entre 10 g et 20 g.

14. Soupape d'arrêt (200, 300) selon la revendication 1 ou la revendication 2,
dans laquelle la soupape présente un élément d'actionnement (222), avec lequel le dispositif de fermeture (206) peut être amené de l'état fermé dans l'état ouvert et simultanément l'élément d'appui peut être amené de la deuxième position dans la première position, de sorte que le corps inertiel (210) peut revenir automatiquement dans sa position de repos.

15. Soupape d'arrêt (200, 300) selon l'une quelconque des revendications précédentes,
dans laquelle la soupape présente un élément d'affichage (242), lequel indique que le dispositif de fermeture (206) se trouve dans la position ouverte et/ou fermée ;
dans laquelle l'élément d'affichage (242) est posé sur la soupape de préférence de manière à pouvoir être amené en rotation autour d'un deuxième axe et présente un excentrique (244), qui s'insère dans le dispositif de fermeture (206), de sorte que l'élément d'affichage (242) présente dans la position ouverte du dispositif de fermeture (206) un premier angle de rotation et dans la position fermée du dispositif de fermeture un deuxième angle de rotation.

16. Véhicule (400), de préférence une caravane ou un camping-car, avec une soupape d'arrêt (200, 300) selon l'une quelconque des revendications 1 à 15.
